# DEMANDE DE BREVET EUROPEEN

(11) **EP 2 207 325 A1**
(43) Date de publication de la demande: **14.07.2010**
(21) Numéro de dépôt: 10150114.6
(22) Date de dépôt: 05.01.2010
(51) Int. Cl.: H04L 29/06

(54) **Procédé de fourniture d'informations de présence d'un utilisateur dans un réseau**

(30) Priorité: 07.01.2009 FR 0900046
(71) Demandeur: Alcatel Lucent, 75008 Paris (FR)
(72) Inventeur: Saidi, Mohamed Adel, 91620, Nozay (FR); Poussiere, Fabrice, 91620, Nozay (FR)
(74) Mandataire: Shamsaei Far, Hassan

(57) **Abrégé**

L'invention concerne un procédé de fourniture d'informations de présence d'un utilisateur dans un réseau (1), ledit procédé prévoyant :
- d'identifier une session entre un terminal (3, 4) de l'utilisateur et un serveur (5) de fourniture d'un service dans ledit réseau ;
- d'analyser le trafic échangé au cours de ladite session identifiée de sorte à déterminer des informations de présence dudit utilisateur ;
- de mettre lesdites informations de présence à disposition d'un service de présence du réseau (1).

## Description

L'invention concerne un procédé de fourniture d'informations de présence d'un utilisateur dans un réseau, un serveur mandataire pour une telle fourniture ainsi qu'un réseau comprenant au moins un tel serveur mandataire.

Les services de présence permettent aux utilisateurs d'un réseau notamment de télécommunication d'accepter, de stocker et de fournir des informations de présence relatives à leur volonté et à leur possibilité de communiquer avec d'autres utilisateurs dudit réseau.

Les informations de présence peuvent être établies manuellement par l'utilisateur ou automatiquement par l'intermédiaire de capteurs pour informer les autres utilisateurs de l'état de connexion dans le réseau d'un terminal de l'utilisateur (connecté, veille, hors connexion, ne pas déranger...), du lieu de connexion (à la maison, au travail, ...), de l'identité ou des préférences de l'utilisateur.

En particulier, les informations de présence sont établies pour être utilisées dans un service de messagerie instantanée (Instant Messaging en anglais) ou dans un service de voix sur réseau IP (VoIP en anglais). Pour ce faire, il est connu d'établir les informations de présence suivant des modèles compatibles avec le protocole XMPP (pour protocole extensible de présence et de messagerie ou extensible Messaging and Presence Protocol en anglais) ou le protocole SIMPLE (pour Session Initiation Protocol for Instant Messaging and Presence Leveraging Extensions en anglais).

Toutefois, les informations de présence établies selon l'art antérieur ne permettent pas de décrire la présence de l'utilisateur de façon suffisamment complète pour être véritablement utiles pour les autres utilisateurs ou pour les services utilisant lesdites informations.

L'invention vise à perfectionner l'art antérieur en proposant notamment un enrichissement automatique des informations de présence de sorte à les rendre disponibles dans le réseau. En particulier, notamment dans le cadre de la technologie dite du web 2, l'invention permet d'améliorer une coopération basée sur un trafic Internet multimédia et/ou de communication. En outre, ces informations enrichies peuvent être utilisées comme base pour de nouveaux genres de réseaux sociaux. Enfin, l'invention permet d'optimiser l'utilisation des services de messagerie instantanée, en particulier au niveau du contrôle parental.

A cet effet, et selon un premier aspect, l'invention propose un procédé de fourniture d'informations de présence d'un utilisateur dans un réseau, ledit procédé prévoyant :
- d'identifier une session entre un terminal de l'utilisateur et un serveur de fourniture d'un service dans ledit réseau ;
- d'analyser le trafic échangé au cours de ladite session identifiée de sorte à déterminer des informations de présence dudit utilisateur ;
- de mettre lesdites informations de présence à disposition d'un service de présence du réseau.

Selon un deuxième aspect, l'invention propose un serveur mandataire pour la fourniture d'informations de présence d'un utilisateur dans un réseau, ledit serveur comprenant :
- un module d'identification d'une session entre un terminal de l'utilisateur et un serveur de fourniture d'un service dans ledit réseau ;
- un module d'analyse du trafic échangé au cours de ladite session identifiée de sorte à déterminer des informations de présence dudit utilisateur ;
- un module de communication desdites informations de présence à un service de présence du réseau.

Selon un troisième aspect, l'invention propose un réseau comprenant au moins un tel serveur mandataire qui est connecté d'une part à un serveur de mise à disposition des informations de présence déterminées et d'autre part à au moins un serveur de fourniture d'un service, ledit serveur mandataire étant disposé sur l'accès au réseau pour un terminal d'un utilisateur.

D'autres particularités et avantages de l'invention apparaîtront dans la description qui suit, faite en référence aux figures jointes dans lesquelles :
- la figure 1 représente une architecture de mise en oeuvre d'un procédé de fourniture d'informations de présence selon un mode de réalisation de l'invention ;
- la figure 2 représente l'architecture d'un réseau dans lequel le procédé selon la figure 1 est mis en oeuvre.

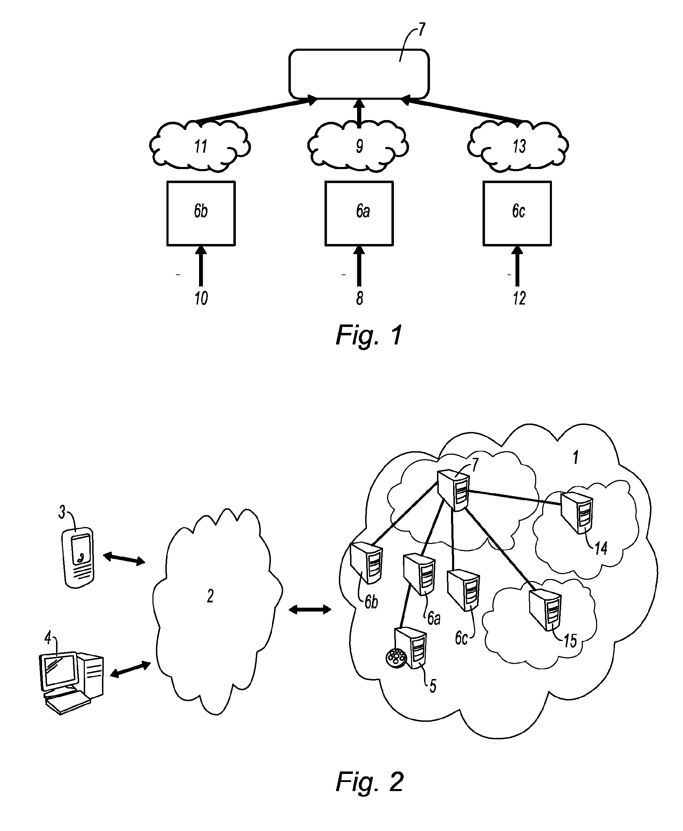

En relation avec ces figures, on décrit ci-dessous un mode de réalisation d'un procédé de fourniture d'informations de présence d'un utilisateur dans un réseau 1, notamment un réseau Internet. Comme représenté sur la figure 2, l'utilisateur peut se connecter au réseau Internet 1 par l'intermédiaire d'un réseau 2 d'accès IP, par exemple au moyen d'un téléphone portable 3 ou d'un ordinateur 4.

L'utilisateur peut alors requérir l'ouverture d'une session entre l'un de ses terminaux 3, 4 et un serveur 5 de fourniture d'un service dans le réseau Internet 1. En particulier, le service peut être relatif à la fourniture d'un contenu multimédia ou à une communication téléphonique. Pour ce faire, un protocole de négociation de l'ouverture de la session est mis en oeuvre entre le terminal 3, 4 et le serveur 5.

Le procédé prévoit d'identifier la session et d'analyser le trafic échangé au cours de ladite session de sorte à déterminer des informations de présence de l'utilisateur. En particulier, la session peut être identifiée lors de la mise en oeuvre du protocole de négociation de l'ouverture de la session.

Ensuite, le procédé prévoit de mettre lesdites informations de présence à disposition d'un service de présence du réseau. En particulier, préalablement à leur mise à disposition, les informations de présence peuvent être agrégées selon le modèle utilisé par le service de présence, notamment pour les protocoles XMPP ou SIMPLE.

L'identification de la session peut comprendre la détermination d'informations de présence de l'utilisateur dans le réseau 1, en particulier des informations de présence selon l'art antérieur qui sont relatives au service, à l'utilisateur et au terminal 3, 4. Ensuite, l'analyse du trafic échangé permet d'enrichir ces informations de présence, notamment par détermination d'attributs supplémentaires dans les informations de présence, par exemple d'attributs relatifs à des données d'utilisation et/ou de nature du service fourni à l'utilisateur. En particulier, de multiples attributs peuvent être agrégés en une information de présence enrichie qui est mise à disposition du service de présence.

Selon une réalisation, le trafic multimédia échangé comprend les images et le son qui sont relatifs au service multimédia demandé par l'utilisateur ainsi que des métadonnées qui sont relatives à l'utilisation dudit service. En particulier, les informations de présence peuvent être déterminées par analyse des métadonnées brutes de sorte à les convertir en informations compatibles avec les services de présence. Ainsi, l'activité multimédia d'un utilisateur est automatiquement détectée et analysée pour enrichir les informations de présence selon les modèles existants, de sorte à les rendre disponibles pour les autres utilisateurs ou pour les services, notamment les services de réseaux sociaux, devant les utiliser dans le réseau 1.

Dans des exemples de réalisation, les protocoles utilisés pour la négociation et l'échange du trafic peuvent être choisis parmi les protocoles SIP (pour Session Initiation Protocol en anglais), RTSP (pour Real Time Streaming Protocol en anglais), RTP (pour Real-time Transport Protocol en anglais), MMS (pour Microsoft^{®} Média Services en anglais), HTTP (pour HyperText Transfer Protocol en anglais), SDP (pour Session Description Protocol en anglais).

En relation avec les figures, on décrit ci-dessous un réseau comprenant au moins un serveur mandataire 6 (dénommé PNA pour Proxy Network Agent en anglais) pour la fourniture d'informations de présence. Le procédé selon l'invention peut être intégré dans un modèle existant de présence, par exemple un modèle XMPP ou SIP/SIMPLE, à l'intérieur d'une architecture IMS (pour IP Multimedia Subsystem en anglais).

Le serveur PNA 6 comprend :
- un module d'identification d'une session entre un terminal 3, 4 de l'utilisateur et un serveur 5 de fourniture d'un service dans ledit réseau ;
- un module d'analyse du trafic échangé au cours de ladite session identifiée de sorte à déterminer des informations de présence dudit utilisateur ;
- un module de communication desdites informations de présence à un service de présence du réseau.

En outre, le serveur PNA 6 est connecté d'une part à un serveur 7 de mise à disposition des informations de présence déterminées et d'autre part à au moins un serveur 5 de fourniture d'un service. Par ailleurs, le serveur PNA 6 est disposé sur l'accès au réseau 1 pour un terminal 3, 4 d'un utilisateur. Ainsi, dès qu'un utilisateur initie une session, le serveur PNA 6 peut identifier ladite session.

En particulier, un utilisateur peut souscrire à un serveur PNA 6 en tant que fournisseur de présence au moyen des informations de présence fournies par ledit serveur PNA. Pour ce faire, une interface graphique peut être proposée sur le terminal 3, 4 de l'utilisateur afin de souscrire au serveur PNA 6 et une interface peut être prévue entre le serveur PNA 6 et un serveur de présence du réseau 1.

Le réseau 1 peut comprendre plusieurs serveurs PNA 6 qui sont dédiés chacun à l'analyse d'un type de trafic échangé, notamment d'un type en fonction du protocole de signalisation utilisé pour ledit trafic. Sur les figures, trois serveurs PNA 6a-6c sont déployés.

Le premier serveur PNA 6a est chargé de l'identification et de l'analyse des sessions multimédia 8 utilisant les protocoles RTSP, HTTP, MMS et RTP. Pour ce faire, le serveur PNA 6a est connecté au serveur 5 de fourniture de service multimédia. Ainsi, dès qu'un utilisateur initie une session multimédia, le serveur PNA 6a identifie la session multimédia puis analyse le trafic au travers des tunnels suivant ces protocoles, de sorte à remonter au serveur 7 des informations de présence 9 relatives aux données média analysées.

Le deuxième serveur PNA 6b est chargé de l'identification et de l'analyse des sessions de communication 10 utilisant le protocole SIP et SDP. Ainsi, lorsque l'utilisateur fait un appel en VoIP, le serveur PNA identifie et analyse la session de données dans les paquets SIP et SDP qui sont en mode texte. Après l'établissement de la communication, le tunnel RTP peut être utilisé pour analyser les métadonnées dans le trafic RTP, de sorte à remonter au serveur 7 les informations de présence 11 relatives à ces métadonnées. Par exemple, les informations déterminées peuvent être relatives à l'adresse URI (pour Uniform Resource Identifier en anglais) de l'appelant et/ou de l'appelé, l'adresse IP du terminal, ....

Le troisième serveur PNA 6c est chargé de l'identification et de l'analyse des sessions web 12 utilisant le protocole HTTP, par exemple pour déterminer les informations relatives à l'adresse URL (pour Uniform Resource Locator en anglais) des sites visités, les adresses IP sources, ..... Ainsi, les informations de présence 13 relatives aux données analysées sont remontées au serveur 7.

L'analyse du trafic échangé peut concerner les métadonnées des protocoles RTP, XML (pour Extensible Markup Language en anglais) ou de signalisation. Ainsi, les informations de présence déterminées selon l'invention peuvent être par exemple relatives :
- au contenu multimédia (titre du film, film à haute définition, longueur du film, ...)
- au type de média (vidéo, audio,...) ;
- au type de transport du média (RTSP, HTTP, MMS,...) ;
- au mode de connexion (flux continu, téléchargement progressif,...) ;
- au statut de la session multimédia (play, pause,...)
- à l'adresse URL des sites, au type de contenu ;
- à l'adresse de l'appelant ou de l'appelé, à la durée de la communication, au type de terminal utilisé (par exemple sur son système d'exploitation).

Dans le mode de réalisation représenté sur la figure 2, les serveurs PNA 6 sont connectés à un unique serveur 7 de mise à disposition des informations de présence, ledit serveur étant connecté respectivement à un serveur XMPP 14 et à un serveur 15 de fourniture d'un service de présence dans un réseau IMS. Ainsi, les métadonnées analysées sont formatées par les serveurs PNA 6 en informations de présence qui sont envoyées à un unique serveur 7 pour leur mise à disposition dans les serveurs 14, 15.

## Revendications

1. Procédé de fourniture d'informations de présence d'un utilisateur dans un réseau (1), ledit procédé prévoyant :
- d'identifier une session entre un terminal (3, 4) de l'utilisateur et un serveur (5) de fourniture d'un service dans ledit réseau ;
- d'analyser le trafic échangé au cours de ladite session identifiée de sorte à déterminer des informations de présence dudit utilisateur ;
- de mettre lesdites informations de présence à disposition d'un service de présence du réseau (1).

2. Procédé selon la revendication 1, **caractérisé en ce que** la session est identifiée lors de la mise en oeuvre d'un protocole de négociation de l'ouverture de la session entre le terminal (3, 4) et le serveur (5).

3. Procédé selon la revendication 1 ou 2, **caractérisé en ce que** le trafic échangé comprend des données relatives au service et des métadonnées relatives à l'utilisation dudit service, les informations de présence étant déterminées par analyse desdites métadonnées.

4. Procédé selon l'une quelconque des revendications 1 à 3, **caractérisé en ce que** l'identification de la session comprend la détermination d'informations de présence de l'utilisateur dans le réseau (1), le trafic échangé étant analysé pour enrichir lesdites informations de présence.

5. Procédé selon la revendication 4, **caractérisé en ce que** l'enrichissement comprend la détermination d'attributs supplémentaires dans les informations de présence.

6. Procédé selon l'une quelconque des revendications 1 à 5, **caractérisé en ce que**, préalablement à leur mise à disposition, les informations de présence sont agrégées selon le modèle utilisé par le service de présence.

7. Serveur mandataire (6) pour la fourniture d'informations de présence d'un utilisateur dans un réseau (1), ledit serveur comprenant :
- un module d'identification d'une session entre un terminal (3, 4) de l'utilisateur et un serveur (5) de fourniture d'un service dans ledit réseau ;
- un module d'analyse du trafic échangé au cours de ladite session identifiée de sorte à déterminer des informations de présence dudit utilisateur ;
- un module de communication desdites informations de présence à un service de présence du réseau (1).

8. Réseau comprenant au moins un serveur mandataire (6) selon la revendication 7 qui est connecté d'une part à un serveur (7) de mise à disposition des informations de présence déterminées et d'autre part à au moins un serveur (5) de fourniture d'un service, ledit serveur mandataire étant disposé sur l'accès au réseau (1) pour un terminal (3, 4) d'un utilisateur.

9. Réseau selon la revendication 8, **caractérisé en ce qu'**il comprend plusieurs serveurs mandataires (6a-6c) qui sont dédiés chacun à l'analyse d'un type de trafic échangé.

10. Réseau selon la revendication 8 ou 9, **caractérisé en ce que** le serveur (7) de mise à disposition des informations de présence est connecté à au moins un serveur (14, 15) de fourniture d'un service de présence dans ledit réseau.
